# EUROPEAN PATENT SPECIFICATION

(11) **EP 2 365 917 B1**
(45) Date of publication and mention of the grant of the patent: **05.03.2014**
(21) Application number: 08782569.1
(22) Date of filing: 31.07.2008
(51) Int. Cl.: B60K 17/00, B60K 17/04, F16H 1/22, F16H 57/021

(54) **FINAL DRIVE FOR A WORK MACHINE**
AUSGLEICHSGETRIEBE FÜR EINE ARBEITSMASCHINE
TRACTION ARRIÈRE POUR MACHINE DE TRAVAIL

(43) Date of publication of application: 21.09.2011
(73) Proprietor: Knowles, Richard, N., Waterloo, IA 50701 (US)
(72) Inventor: KNOWLES, Richard, N., Waterloo, IA 50701 (US); HANSON, Samantha, Waterloo, IA 50701 (US); NIEBERGALL, James A., Buckingham, IA 50612 (US); STETTLER, Werner, Ceddar Falls, IA 50613 (US); BORGMANN, Benjamin, Waterloo, IA 50704 (US); VALLINAYAGAM, Muthukumar, Taamil Nadu 627811 (IN)
(74) Representative: Dehnhardt, Florian Christopher
(86) International application number: PCT/US2008/071776
(87) International publication number: WO 2010/014098

(56) References cited:
- WO-A1-01/98100
- DE-A1- 2 041 784
- DE-A1- 3 640 947
- DE-A1- 19 604 730
- DE-A1- 19 852 394
- DE-A1- 19 852 663
- FR-A5- 2 136 160
- GB-A- 2 080 747
- US-A- 1 373 142
- US-A- 3 862 667
- US-A- 4 543 020
- US-B2- 6 886 655

## Description

The present invention relates to a final drive for a vehicle, in particular an agricultural or construction tractor.

Document GB 20 80 747 describes a final drive according to the preamble of claim 1.

A vehicle such as an agricultural or construction tractor may include an internal combustion (IC) engine which provides input power to a transmission, which in turn is coupled with and drives rear axles through a rear end differential. The rear end differential and rear axles are sometimes referred to as the rear end of the vehicle.

Some agricultural tractors are equipped with high-crop rear axles that provide high vehicle clearance. The high vehicle clearance is provided by a highly positioned rear end differential, having highly positioned transverse output shafts that connect the rear end differential to final drives. Each of the final drives has a highly positioned input to receive one of the transverse output shafts of the rear end differential and a lower bull gear that is mounted to a rear axle. Each of the transverse output shafts is connected to a pinion shaft in one of the two final drives. The pinion shaft of each final drive forms a pinion gear having gear teeth that engage with teeth on two idler gears. Teeth on the idler gears engage teeth on the bull gear that is connected to the rear axle.

While, in theory, each of the idler gears transfers one half of the torque from the pinion gear to the bull gear, in practice, due to manufacturing tolerances of the final drive housing, the pinion gear, the idler gears, and the bull gears, one of the idler gears may transfer as much as seventy percent of the torque of the pinion gear to the bull gear. Since the torque is transferred by the few engaged gear teeth of the gears and since the gear teeth of each of the gears must have the same pitch to mesh with each other, each of the gears must be designed with larger teeth that can transfer the seventy percent of the torque of the pinion gear. Further, the larger teeth require a larger final drive housing and the bearings that support the gears must be large enough to provide sufficient bearing life for the transfer of the seventy percent of the torque of the pinion gear. Consequently, all components in the final drive must be larger than theoretically otherwise needed. Further, the larger gear teeth and larger bearings limit the maximum rotational speed of the gears and, consequently, the maximum speed of the rear axle and the speed of the vehicle.

What is needed in the art is a final drive for a vehicle, in particular an agricultural or construction tractor, that is efficient, permits the use of smaller, lighter weight, less expensive components, and permits higher vehicle speeds.

This and other objects are achieved by the present invention, wherein a final drive for a vehicle is provided. The final drive comprises a final drive housing. A pinion gear is restrained within the final drive housing. A first idler gear is rotatably connected to the final drive housing and positioned for engagement with the pinion gear. A second idler gear is rotatably connected to the final drive housing and positioned for engagement with the pinion gear. A bull gear is rotatably connected to the final drive housing and positioned for engagement with the first idler gear and the second idler gear. The final drive housing, the pinion gear, the first idler gear, and the second idler gear are configured to permit the pinion gear to float between the first idler gear and the second idler gear, to provide even sharing of the load from the pinion gear to the first idler gear and the second idler gear.

For a complete understanding of the objects, techniques, and structure of the invention reference should be made to the following detailed description and accompanying drawings, wherein similar components are designated by identical reference numerals:
- Fig. 1: is a cross-sectional view of an embodiment of a final drive according to the present invention,
- Fig. 2: is a perspective view of a rear end including the final drive of Fig. 1,
- Fig. 3: is a cross-sectional view of the rear end of Fig. 2, taken along line 3-3 in the direction of the arrows, showing components of the rear end and the final drive in greater detail,
- Fig. 4: is a partial cross-sectional view of the rear end of Fig. 3, showing the final drive in greater detail,
- Fig. 5: is an enlarged partial cross-sectional view of the rear end of Fig. 3, showing a pinion gear and a final drive housing in greater detail,
- Fig. 6: is a partial exploded perspective view of the rear end of Fig. 2, showing the pinion gear and an idler gear in greater detail,
- Fig. 7: is a partial cross-sectional perspective view of the rear end of Fig. 2, showing the pinion gear in greater detail, and
- Fig. 8: is a partial cross-sectional view of the rear end of Fig. 3, showing the rear axle of the final drive in greater detail.

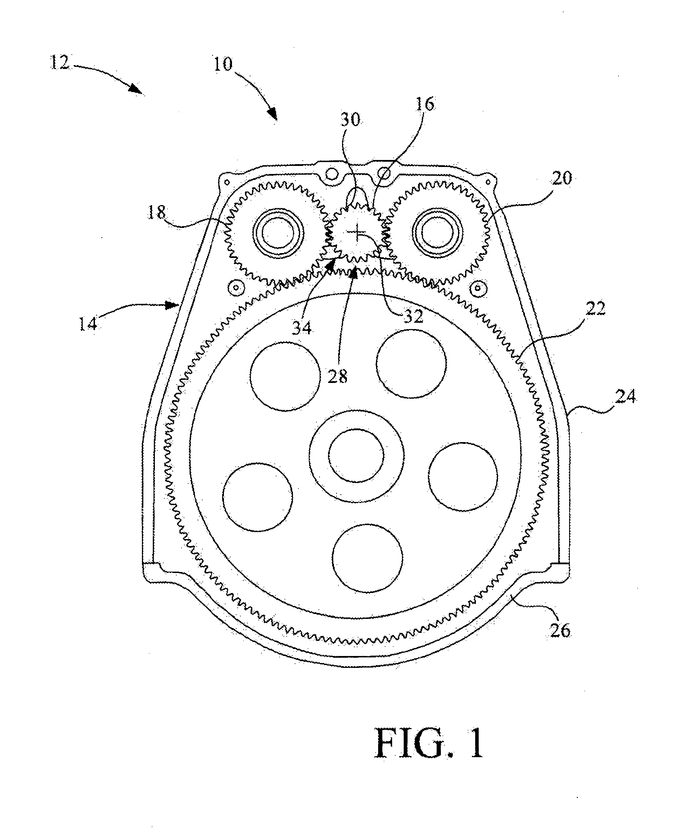

According to the present invention and referring now to Fig. 1, a final drive 10 of a portion 12 of a vehicle is shown. The final drive 10 includes a final drive housing 14 and a pinion gear 16 restrained within the final drive housing 14. The vehicle may be, for example, in the form of an agricultural or construction tractor. The final drive 10 serves to transfer torque to the vehicle.

The final drive 10 further includes a first idler gear 18 rotatably connected to the final drive housing 14 and positioned for meshing engagement with the pinion gear 16. The final drive 10 further includes a second idler gear 20 rotatably connected to the final drive housing 14 and positioned for meshing engagement with the pinion gear 16. The final drive 10 further includes a bull gear 22.

The bull gear 22 is rotatably connected to the final drive housing 14 and positioned for meshing engagement with the first idler gear 18 and the second idler gear 20. The final drive housing 14, the pinion gear 16, the first idler gear 18, and the second idler gear 20 are configured to permit the pinion gear 16 to float between the first idler gear 18 and the second idler gear 20 to result in gear forces between the pinion gear 16 and the first idler gear 18 and between the pinion gear 16 and the second idler gear 20 being equal to each other.

The final drive housing 14 may have any suitable shape capable of receiving the gears 16, 18, 20, and 22. The final drive housing 14 may be made of any suitable durable material and may, for example, be made of a casting, for example a gray iron casting. The final drive housing 14 may be made of multiple components and, as shown, includes an upper interior housing portion 24 and an upper exterior housing portion (not shown) similar to the upper interior housing portion 24. The final drive housing 14 further includes a lower interior housing portion 26. The multiple housing portions 24 and 26 provide access to the interior of the final drive housing 14 to permit assembly of the gears 16, 18, 20, and 22 into the final drive 10.

The pinion gear 16, the first idler gear 18, the second idler gear 20, and the bull gear 22 may be made of any suitable durable material and may, for example, be made of a steel and may be machined by conventional machining processes. The gears 16, 18, 20, and 22 may, for example and for simplicity, be in the form of spur gears having external teeth in the form of gear teeth.

For example and as shown in Fig. 1, the pinion gear 16 includes a portion 28 having external gear teeth 30. The pinion gear 16 defines an axis of rotation 32 thereof. The pinion gear 16 is movable in a direction normal to the axis of rotation 32 of the pinion gear 16 at a position 34 adjacent the portion 28 of the pinion gear 16 having external gear teeth 30. The pinion gear 16 is movable a sufficient amount to assure that the forces transferred from the pinion gear 16 to the first idler gear 18 and from the pinion gear 16 to the second idler gear 20 are substantially the same. Such equalization of forces is possible since the pinion gear 16 is permitted to move in a direction normal to the axis of rotation 32 of the pinion gear 16 an amount sufficient to balance the forces between the first idler gear 18 and the second idler gear 20.

The amount of normal movement of the pinion gear 16 needed depends on the precision of the components of final drive 10. For example, the amount of motion in a direction normal to the axis of rotation 32 of the pinion gear 16 required depends on the precision of the first idler gear 18 and the second idler gear 20, as well as, the precision of the housing bores, bearings, and shafts used to mount the first idler gear 18 and the second idler gear 20 to the final drive housing 14.

For example, the pinion gear 16 may be movable, for example, at least 0.10 to 1.0 millimeters in a direction normal to the axis of rotation 32 of the pinion gear 16 at the position 28 adjacent the external gear teeth 30 of the pinion gear 16. For example, the pinion gear 16 may, alternately, be movable from about 0.2 to 0.8 millimeters in a direction normal to the axis of rotation 32 of the pinion gear 16, or may, alternatively, be movable at least 0.50 millimeters in a direction normal to the axis of rotation 32 of the pinion gear 16.

The pinion gear 16, the first idler gear 18, the second idler gear 20 and the bull gear 22 each includes external gear teeth 30. The external gear teeth 30 of the gears 16, 18, 20, and 22, preferably, have the same pitch such that the gears 16, 18, 20, and 22 may mesh and rotate as a gear train. The first idler gear 18, the second idler gear 20, and the bull gear 22 are rotatably connected to the final drive housing 14 in any suitable fashion. For example, the gears 18, 20, and 22 are supported by rotating element bearings (described in greater detail later herein) which accurately and durably support the gears 18, 20, and 22 within the final drive housing 14.

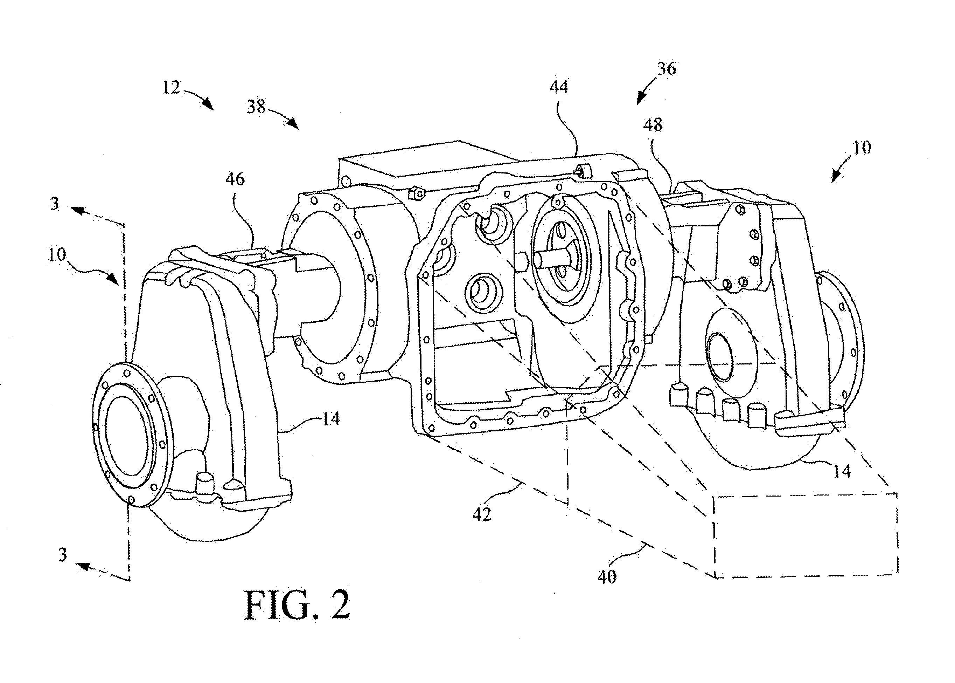

Referring now to Fig. 2, the final drive 10 of the present invention is shown connected to rear end differential 36 to form rear end 38. The rear end 38 is a portion of the vehicle. The vehicle, as shown in Fig. 2, includes an engine 40. The engine 40 may be any suitable engine and may, for example, be a gasoline or diesel reciprocating piston engine. The engine 40 may be turbocharged or have its power enhanced by one of several various engine devices.

The vehicle, as shown in Fig. 2, further includes a transmission 42 coupled to the engine 40. The transmission 42 may be a manual or automatic transmission. The transmission 42, as shown in Fig. 2, is connected or coupled to rear end differential 36. The rear end differential 36 includes a differential housing 44. A right intermediate housing 46 mounts onto differential housing 44 and connects the differential housing 44 to the right one of the two final drive housings 14.

Similarly, a left intermediate housing 48 mounts onto differential housing 44 and connects the differential housing 44 to the left one of the two final drive housings 14. The left intermediate housing 48 is identical to the right intermediate housing 46. Alternatively, the left intermediate housing 48 is similar to or substantially different than the right intermediate housing 46.

The two final drives 10 are, for simplicity, identical to each other. One of the two final drives 10 is used for the right side of the vehicle and the other one of the two final drives 10 is used for the left side of the vehicle. It should be appreciated that the final drives 10 may be different on the left and right side of the vehicle and may, for example, be symmetrical or be significantly different from each other.

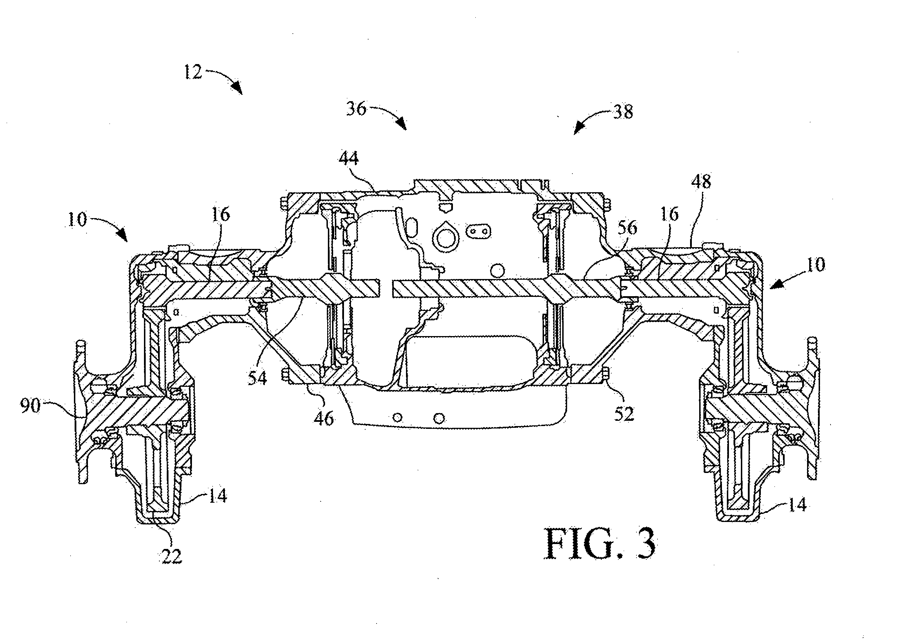

Referring now to Fig. 3, the rear end 38 of the vehicle is shown in greater detail in cross-section. The differential housing 44 supports the components of the rear end differential 36. The right intermediate housing 46 and the left intermediate housing 48 are secured to the differential housing 44 in an appropriate manner, for example by fasteners in the form of cap screws 52. The right intermediate housing 46 includes a right intermediate shaft 54, while the left intermediate housing 48 includes a left intermediate shaft 56. The intermediate shafts 54 and 56 transfer power from the rear differential 36 to the final drives 10.

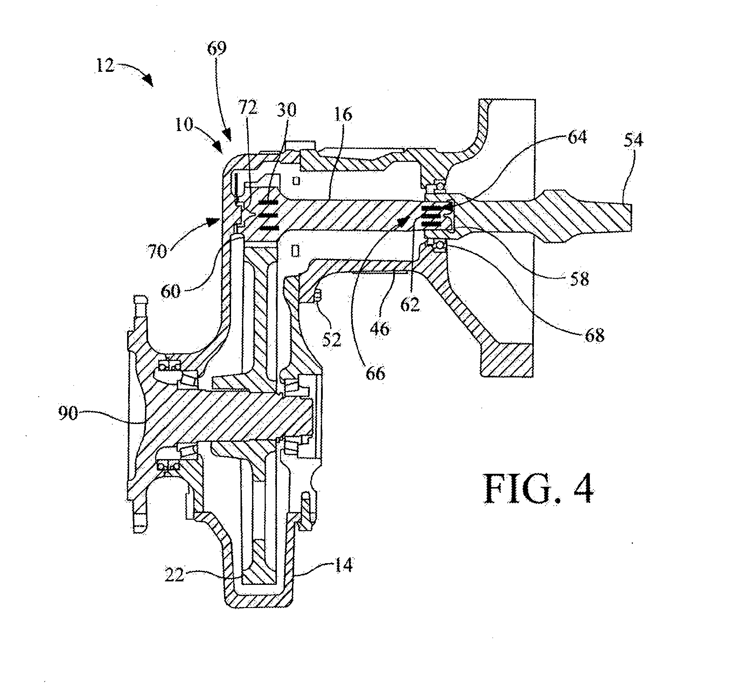

Referring now to Fig. 4, the final drive 10 is shown in greater detail. It should be appreciated that the final drive 10, as shown in Fig. 4, is positioned on the right side of the vehicle and may be described as the right final drive. The left final drive is positioned on the left side of the vehicle and is identical to the right final drive.

The pinion gear 16 of the final drive 10 includes a first end 58 and an opposed second end 60. The pinion gear 16 is supported at the first end 58. For example and as shown in Fig. 4, the first end 58 of the pinion gear 16 includes external splines 62 which mate with internal splines 64 formed in recess 66 of right intermediate shaft 54. The right intermediate shaft 54 is rotatably secured to right intermediate housing 46 by intermediate housing bearings 68 in the form of ball type bearings. Other types of bearings may, alternatively, be used. The pinion gear 16 includes the external gear teeth 30 positioned adjacent the second end 60 of the pinion gear 16.

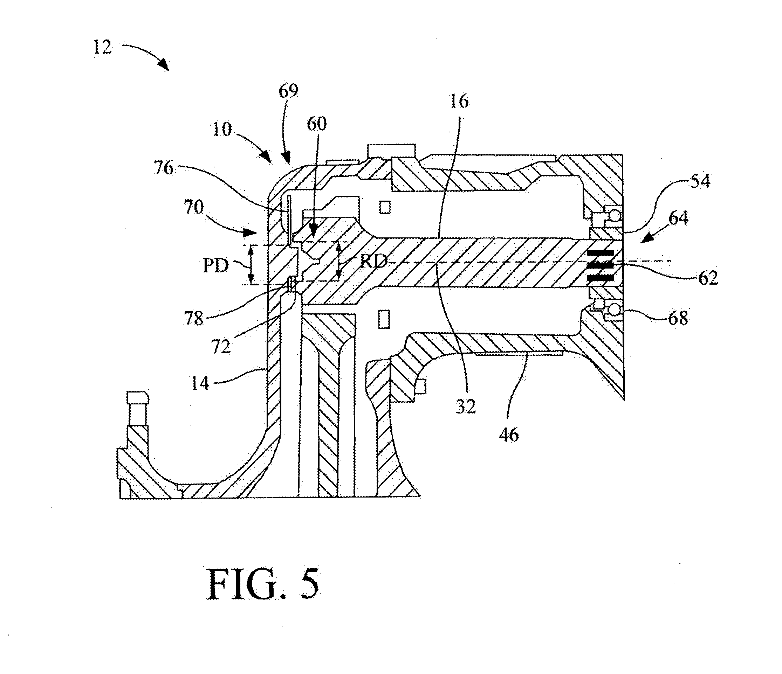

Referring now to Fig. 5, the pinion gear 16 is shown in greater detail in cooperation with the final drive housing 14. The final drive 10 includes a feature 69 for supporting the second end 60 of the pinion gear 16 while permitting the second end 60 to move normally to the axis of rotation 32 of the pinion gear 16. The feature 69 includes a pinion gear recess 70 formed in the second end 60 of the pinion gear 16. The feature 69 also includes a protrusion 72 extending inwardly on final drive housing 14. The pinion gear recess 70 of the pinion gear 16 is fitted to receive the protrusion 72 of the final drive housing 14.

The protrusion 72 and the pinion gear recess 70, as shown, are generally cylindrical. Alternate shapes of the protrusion 72 and the pinion gear recess 70 may be used. Alternatively, the pinion gear 16 may have the protrusion and the final drive housing 14 may have the recess. The protrusion 72 is defined by protrusion diameter PD and the pinion gear recess 70 is defined by recess diameter RD. It should be appreciated that the protrusion diameter PD is slightly smaller than the recess diameter RD of the pinion gear 16. The difference between the recess diameter RD and the protrusion diameter PD forms a clearance between the pinion gear 16 and the final drive housing 14 to permit movement of the pinion gear 16 in a direction normal to the axis of rotation 32 of the pinion gear 16. It should be appreciated that, for a motion of the pinion gear 16 from the axis of rotation 32 of the pinion gear 16 of 0.050 millimeters, the recess diameter RD must be 0.10 millimeters larger than the protrusion diameter PD.

The radial movement from the axis of rotation 32 of the pinion gear 16 may be further limited by the clearance between internal splines 64 of the right intermediate shaft 54 and external splines 62 of the pinion gear 16. The internal bearing clearance of the intermediate housing bearing 68 may further affect the ability of the pinion gear 16 to deflect. The rigidity of the pinion gear 16, final drive housing 14 and right intermediate housing 46 may further affect the ability of the pinion gear 16 to deflect radially.

The final drive 10 further includes a thrust bearing 76 that is secured to final drive housing 14. The pinion gear 16 includes a face 78 that rotatably cooperates with thrust bearing 76. The thrust bearing 76 may have a unitary construction. The thrust bearing 76 may be made of a soft bearing journal material, such as bronze, or a hard bearing material, such as hardened steel. The thrust bearing 76 may, alternately, be integral with the final drive housing 14.

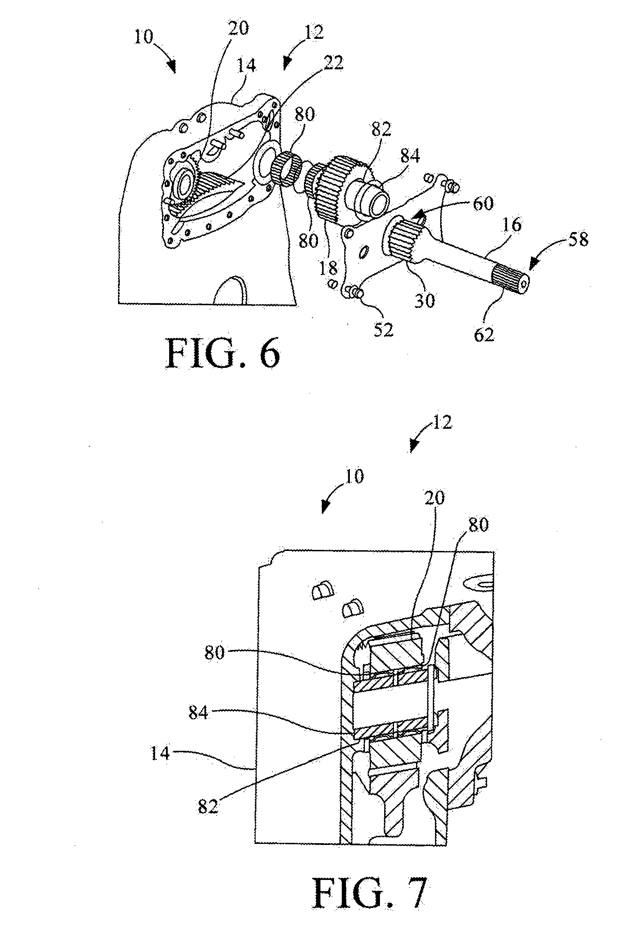

Referring now to Fig. 6, the first idler gear 18 is shown in an exploded view ready for assembly into final drive housing 14. The first idler gear 18 includes a pair of spaced apart bearings 80 that, as shown, are in the form of caged needle roller bearings. The bearings 80 rotate on journal 82 of idler shaft 84 that is rigidly secured to final drive housing 14. Other types of bearings may be used. The pinion gear 16 includes the external splines 62 formed on first end 58 of the shaft of the pinion gear 16 and external gear teeth 30 located on second end 60 of the pinion gear 16.

As shown in Fig. 7, the second idler gear 20 includes a further pair of spaced apart bearings 80 that, as shown, are in the form of caged needle roller bearings and rotate on a further journal 82 of further idler shaft 84. The further idler shaft 84 is rigidly secured to final drive housing 14. The further pair of bearings 80 provides rotatable securing of the second idler gear 20 to the final drive housing 14.

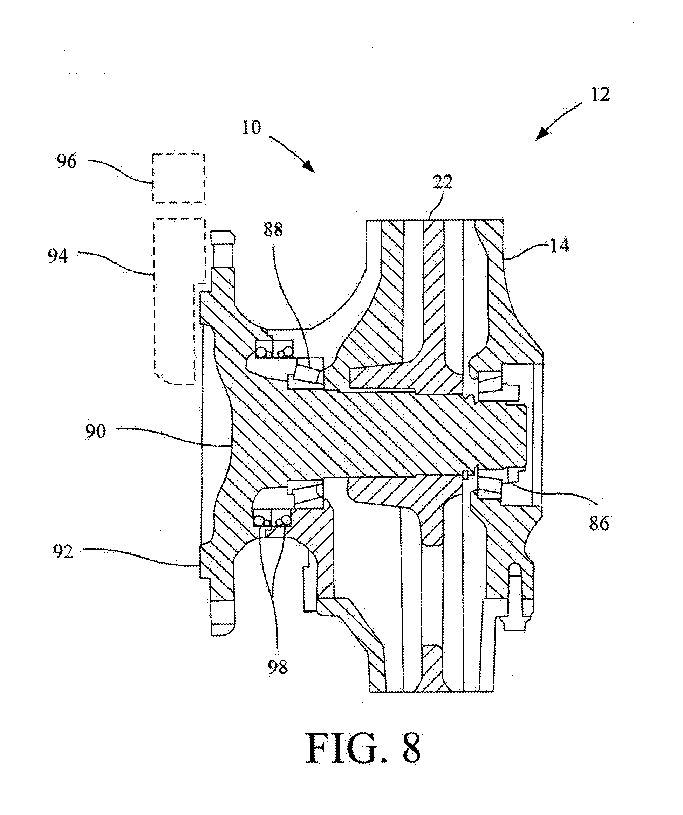

Referring now to Fig. 8, the bull gear 22 is shown in even greater detail. The bull gear 22 is rotatably secured to the final drive housing 14 by inboard bearing 86 and outboard bearing 88. The inboard bearing 86 and the outboard bearing 88 are in the form of tapered roller bearings. Alternately, the bearings 86 and 88 may be cylindrical bearings, spherical roller bearings, or ball bearings. Further, other bearings may be used.

The bull gear 22 is rigidly connected to rear axle 90 to which the inboard bearing 86 and the outboard bearing 88 are secured. The rear axle 90 includes an outboard hub 92 to which a wheel 94 is mounted. A rubber tire 96 is mounted onto the wheel 94. The outboard hub 92 of the rear axle 90 is secured to the final drive housing 14 by a pair of opposed angular contact bearings 98.

## Claims

1. A final drive for a vehicle, in particular an agricultural or construction tractor, the final drive (10) comprising a final drive housing (14); a pinion gear (16) restrained within said final drive housing (14); a first idler gear (18) rotatably connected to said final drive housing (14) and positioned for engagement with said pinion gear (16); a second idler gear (20) rotatably connected to said final drive housing (14) and positioned for engagement with said pinion gear (16); and a bull gear (22) rotatably connected to said final drive housing (14) and positioned for engagement with said first idler gear (18) and said second idler gear (20); said final drive housing (14), said pinion gear (16), said first idler gear (18), and said second idler gear (20) configured to permit said pinion gear (16) to float between said first idler gear (18) and said second idler gear (20), to provide even sharing of the load from the pinion gear (16) to said first idler gear (18) and said second idler gear (20), **characterized in that** said pinion gear (16) includes a first end (58) and an opposed second end (60), said pinion gear (16) supported at the first end (58), said pinion gear (16) including external gear teeth (30) positioned adjacent the second end (60), the second end (60) defining a pinion gear recess (70) therein, and said final drive housing (14) including a protrusion (72), the pinion gear recess (70) of the second end (60) of said pinion gear (16) fitted to receive the protrusion (72) of said final drive housing (14) such that the second end (60) of the pinion gear (16) is supported while permitting the second end (60) to move normally to the axis of rotation (32) of the pinion gear (16).

2. The final drive according to claim 1, **characterized in that** said pinion gear (16) includes a first end (58) and an opposed second end (60), said pinion gear (16) rotatably connected to said final drive housing (14) at the first end (58), and said pinion gear (16) including external gear teeth (30) positioned adjacent the second end (60).

3. The final drive according to claim 1, **characterized in that** said pinion gear (16) includes a portion having external gear teeth (30), said pinion gear (16) defining an axis of rotation (32) thereof, and said pinion gear (16) being movable at least 0.50 millimeters in a direction normal to the axis of rotation (32) at a position adjacent the portion having the external gear teeth (30).

4. The final drive according to claim 1, **characterized in that** the pinion gear recess (70) of the second end (60) of said pinion gear (16) defines a cylindrical inner periphery thereof, and the protrusion (72) of said final drive housing (14) defines a cylindrical outer periphery thereof.

5. The final drive according to claim 4, **characterized in that** the cylindrical inner periphery of the pinion gear recess (70) of the second end (60) of said pinion gear (16) defines a recess diameter (RD) thereof, and the protrusion (72) of said final drive housing (14) defines a protrusion diameter (PD) thereof, the recess diameter (RD) being at least 0.50 millimeters larger than the protrusion diameter (PD).

6. The final drive according to claim 1, **characterized in that** said pinion gear (16) includes a first end (58) and an opposed second end (60), said pinion gear (16) including internal splines (64) positioned adjacent the first end (58) and including a shaft, said shaft defining external spline (62) therein, the internal splines (64) of said pinion gear (16) fitted to the external splines (62) of said shaft, and said shaft rotatably secured to said final drive housing (14) adjacent the external splines (62) of said shaft.

7. The final drive according to claim 1, **characterized in that** said pinion gear (16) includes a portion having external gear teeth (30), said pinion gear (16) defining an axis of rotation (32) thereof, and said pinion gear (16) being movable at least 0.50 millimeters in a direction normal to the axis of rotation (32) at a position adjacent the portion having the external gear teeth (30).

8. The final drive according to claim 1, **characterized in that** at least one of said pinion gear (16), said first idler gear (18), said second idler gear (20), and said bull gear (22) comprises a spur gear.

9. A rear end for a vehicle, in particular an agricultural or construction vehicle, the rear end (38) comprising a rear axle (90); and a final drive according to one of claims 1 to 8, wherein said final drive (10) is attached to said rear axle (90).

10. A vehicle, in particular an agricultural or construction vehicle, comprising an engine (40); and a rear end (38) coupled with said engine (40), said rear end (38) including a rear axle (90); and a final drive (10) according to one of claims 1 to 8, wherein said final drive (10) is attached to said rear axle (90).

## Patentansprüche

1. Ausgleichsgetriebe für ein Fahrzeug, insbesondere ein landwirtschaftlicher Traktor oder ein Baugewerbetraktor, wobei das Ausgleichsgetriebe (10) umfasst: ein Ausgleichsgetriebegehäuse (14); ein Ritzelzahnrad (16), welches im Ausgleichsgetriebegehäuse (14) eingespannt ist; ein erstes Zwischenzahnrad (18), welches drehbar mit dem Ausgleichsgetriebegehäuse (14) verbunden ist und zum Eingriff mit dem Ritzelzahnrad (16) positioniert ist; ein zweites Zwischenzahnrad (20), welches drehbar mit dem Ausgleichsgetriebegehäuse (14) verbunden ist und zum Eingriff mit dem Ritzelzahnrad (16) positioniert ist; und ein Großzahnrad (22), welches drehbar mit dem Ausgleichsgetriebegehäuse (14) verbunden ist und zum Eingriff mit dem ersten Zwischenzahnrad (18) und dem zweiten Zwischenzahnrad (20) positioniert ist; wobei das Ausgleichsgetriebegehäuse (14), das Ritzelzahnrad (16), das erste Zwischenzahnrad (18) und das zweite Zwischenzahnrad (20) konfiguriert sind, um es dem Ritzelzahnrad (16) zu gestatten, zwischen dem ersten Zwischenzahnrad (18) und dem zweiten Zwischenzahnrad (20) zu schwimmen, um gleichmäßiges Teilen der Last vom Ritzelzahnrad (16) auf das erste Zwischenzahnrad (18) und das zweite Zwischenzahnrad (20) bereitzustellen, **dadurch gekennzeichnet, dass** das Ritzelzahnrad (16) ein erstes Ende (58) und ein gegenüberliegendes zweites Ende (60) aufweist, wobei das Ritzelzahnrad (16) am ersten Ende (58) getragen ist, wobei das Ritzelzahnrad (16) äußere Zahnradzähne (30) aufweist, welche benachbart dem zweiten Ende (60) positioniert sind, wobei das zweite Ende (60) eine Ritzelzahnradvertiefung (70) darin definiert und wobei das Ausgleichsgetriebegehäuse (14) einen Vorsprung (72) umfasst, wobei die Ritzelzahnradvertiefung (70) des zweiten Endes (60) des Ritzelzahnrads (16) passt, um den Vorsprung (72) des Ausgleichsgetriebegehäuses (14) aufzunehmen, so dass das zweite Ende (60) des Ritzelzahnrads (16) getragen ist, was es dem zweiten Ende (60) erlaubt, sich normal zur Rotationsachse (32) des Ritzelzahnrads (16) zu bewegen.

2. Ausgleichsgetriebe nach Anspruch 1, **dadurch gekennzeichnet, dass** das Ritzelzahnrad (16) ein erstes Ende (58) und ein gegenüberliegendes zweites Ende (60) aufweist, wobei das Ritzelzahnrad (16) mit dem Ausgleichsgetriebegehäuse (14) am ersten Ende (58) verbunden ist und das Ritzelzahnrad (16) äußere Zahnradzähne (30) aufweist, welche benachbart dem zweiten Ende (60) positioniert sind.

3. Ausgleichsgetriebe nach Anspruch 1, **dadurch gekennzeichnet, dass** das Ritzelzahnrad (16) einen Abschnitt umfasst, welcher äußere Zahnradzähne (30) aufweist, wobei das Ritzelzahnrad (16) eine Rotationsachse (32) davon definiert und wobei das Ritzelzahnrad (16) wenigstens 0,50 Millimeter in eine Richtung normal zur Rotationsachse (32) an einer Position benachbart dem Abschnitt mit den äußeren Zahnradzähnen (30) bewegbar ist.

4. Ausgleichsgetriebe nach Anspruch 1, **dadurch gekennzeichnet, dass** die Ritzelzahnradvertiefung (70) des zweiten Endes (60) des Ritzelzahnrades (16) einen zylindrischen inneren Umfang davon definiert, und wobei der Vorsprung (72) des Ausgleichsgetriebegehäuses (14) einen zylindrischen äußeren Umfang dazu definiert.

5. Ausgleichsgetriebe nach Anspruch 4, **dadurch gekennzeichnet, dass** der zylindrische innere Umfang der Ritzelzahnradvertiefung (70) des zweiten Endes (60) des Ritzelzahnrades (16) einen Vertiefungsdurchmesser (RD) davon definiert, und wobei der Vorsprung (72) des Ausgleichsgetriebegehäuses (14) einen Vorsprungsdurchmesser (PD) davon definiert, wobei der Vertiefungsdurchmesser (RD) wenigstens 0,50 Millimeter größer ist als der Vorsprungsdurchmesser (PD).

6. Ausgleichsgetriebe nach Anspruch 1, **dadurch gekennzeichnet, dass** das Ritzelzahnrad (16) ein erstes Ende (58) und ein gegenüberliegendes zweites Ende (60) aufweist, wobei das Ritzelzahnrad (16) innere Keile (64), welche benachbart dem ersten Ende (58) positioniert sind, und eine Welle umfasst, wobei die Welle äußere Keile (62) darin definiert, wobei die inneren Keile (64) des Ritzelzahnrades (16) zu den äußeren Keilen (62) der Welle passen und die Welle drehbar am Ausgleichsgetriebegehäuse (14) benachbart den äußeren Keilen (62) der Welle befestigt ist.

7. Ausgleichsgetriebe nach Anspruch 1, **dadurch gekennzeichnet, dass** das Ritzelzahnrad (16) einen Abschnitt mit äußeren Zahnradzähnen (30) umfasst, wobei das Ritzelzahnrad (16) eine Rotationsachse (32) davon definiert, und wobei das Ritzelzahnrad (16) wenigstens um 0,50 Millimeter in eine Richtung normal zur Rotationsachse (32) an einer Position benachbart dem Abschnitt mit den äußeren Zahnradzähnen (30) bewegbar ist.

8. Ausgleichsgetriebe nach Anspruch 1, **dadurch gekennzeichnet, dass** eines aus der Gruppe Ritzelzahnrad (16), erstes Zwischenzahnrad (18), zweites Zwischenzahnrad (20) und Großzahnrad (22) ein Stirnrad umfasst.

9. Hinteres Ende für ein Fahrzeug, insbesondere ein landwirtschaftliches oder ein baugewerbliches Fahrzeug, wobei das hintere Ende (38) eine Hinterachse (90) und ein Ausgleichsgetriebe nach einem der Ansprüche 1 bis 8 umfasst, wobei das Ausgleichsgetriebe (10) an der Hinterachse (90) angebracht ist.

10. Fahrzeug, insbesondere ein landwirtschaftliches oder ein baugewerbliches Fahrzeug, umfassend einen Motor (40) und ein hinteres Ende (38), welches mit dem Motor (40) gekoppelt ist, wobei das hintere Ende (38) eine Hinterachse (90) umfasst; und ein Ausgleichsgetriebe (10) nach einem der Ansprüche 1 bis 8, wobei das Ausgleichsgetriebe (10) an der Hinterachse (90) angebracht ist.

## Revendications

1. Transmission finale pour un véhicule, en particulier un tracteur agricole ou de construction, la transmission finale (10) comprenant un boîtier de transmission finale (14) ; un engrenage à pignon (16) retenu à l'intérieur dudit boîtier de transmission finale (14) ; un premier engrenage intermédiaire (18) connecté de manière rotative audit boîtier de transmission finale (14) et positionné de manière à s'engager avec ledit engrenage à pignon (16) ; un deuxième engrenage intermédiaire (20) connecté de manière rotative audit boîtier de transmission finale (14) et positionné de manière à s'engager avec ledit engrenage à pignon (16) ; et une grosse roue dentée motrice (22) connectée de manière rotative audit boîtier de transmission finale (14) et positionnée de manière à s'engager avec ledit premier engrenage intermédiaire (18) et avec ledit deuxième engrenage intermédiaire (20) ;
ledit boîtier de transmission finale (14), ledit engrenage à pignon (16), ledit premier engrenage intermédiaire (18) et ledit deuxième engrenage intermédiaire (20) étant configurés de manière à permettre audit engrenage à pignon (16) de flotter entre ledit premier engrenage intermédiaire (18) et ledit deuxième engrenage intermédiaire (20), pour fournir un partage équitable de la charge provenant de l'engrenage à pignon (16) audit premier engrenage intermédiaire (18) et audit deuxième engrenage intermédiaire (20), **caractérisée en ce que** ledit engrenage à pignon (16) comporte une première extrémité (58) et une deuxième extrémité opposée (60), ledit engrenage à pignon (16) étant supporté à la première extrémité (58), ledit engrenage à pignon (16) comportant des dents d'engrenage externes (30) positionnées à côté de la deuxième extrémité (60), la deuxième extrémité (60) définissant un renfoncement d'engrenage à pignon (70) dans celui-ci, et ledit boîtier de transmission finale (14) comportant une saillie (72), le renfoncement d'engrenage à pignon (70) de la deuxième extrémité (60) dudit engrenage à pignon (16) étant prévu pour recevoir la saillie (72) dudit boîtier de transmission finale (14) de telle sorte que la deuxième extrémité (60) de l'engrenage à pignon (16) soit supportée tout en permettant à la deuxième extrémité (60) de se déplacer perpendiculairement à l'axe de rotation (32) de l'engrenage à pignon (16).

2. Transmission finale selon la revendication 1, **caractérisée en ce que** ledit engrenage à pignon (16) comporte une première extrémité (58) et une deuxième extrémité opposée (60), ledit engrenage à pignon (16) étant connecté de manière rotative audit boîtier de transmission finale (14) à la première extrémité (58), et ledit engrenage à pignon (16) comportant des dents d'engrenage externes (30) positionnées à côté de la deuxième extrémité (60).

3. Transmission finale selon la revendication 1, **caractérisée en ce que** ledit engrenage à pignon (16) comporte une portion ayant des dents d'engrenage externes (30), ledit engrenage à pignon (16) définissant un axe de rotation (32) de celui-ci, et ledit engrenage à pignon (16) pouvant être déplacé d'au moins 0,50 millimètre dans une direction perpendiculaire à l'axe de rotation (32) en une position adjacente à la portion ayant les dents d'engrenage externes (30).

4. Transmission finale selon la revendication 1, **caractérisée en ce que** le renfoncement d'engrenage à pignon (70) de la deuxième extrémité (60) dudit engrenage à pignon (16) définit une périphérie interne cylindrique de celui-ci, et la saillie (72) dudit boîtier de transmission finale (14) définit une périphérie externe cylindrique de celui-ci.

5. Transmission finale selon la revendication 4, **caractérisée en ce que** la périphérie interne cylindrique du renfoncement d'engrenage à pignon (70) de la deuxième extrémité (60) dudit engrenage à pignon (16) définit un diamètre de renfoncement (RD) de celui-ci, et la saillie (72) dudit boîtier de transmission finale (14) définit un diamètre de saillie (PD) de celui-ci, le diamètre de renfoncement (RD) étant plus grand d'au moins 0,50 millimètre que le diamètre de saillie (PD).

6. Transmission finale selon la revendication 1, **caractérisée en ce que** ledit engrenage à pignon (16) comporte une première extrémité (58) et une deuxième extrémité opposée (60), ledit engrenage à pignon (16) comportant des cannelures internes (64) positionnées à côté de la première extrémité (58) et comportant un arbre, ledit arbre définissant une cannelure externe (62) dans celui-ci, les cannelures internes (64) dudit engrenage à pignon (16) étant adaptées aux cannelures externes (62) dudit arbre, et ledit arbre étant fixé de manière rotative audit boîtier de transmission finale (14) à côté des cannelures externes (62) dudit arbre.

7. Transmission finale selon la revendication 1, **caractérisée en ce que** ledit engrenage à pignon (16) comporte une portion ayant des dents d'engrenage externes (30), ledit engrenage à pignon (16) définissant un axe de rotation (32) de celui-ci, et ledit engrenage à pignon (16) pouvant être déplacé d'au moins 0,50 millimètre dans une direction perpendiculaire à l'axe de rotation (32) en une position adjacente à la portion ayant les dents d'engrenage externes (30).

8. Transmission finale selon la revendication 1, **caractérisée en ce qu'**au moins l'un parmi ledit engrenage à pignon (16), ledit premier engrenage intermédiaire (18), ledit deuxième engrenage intermédiaire (20), et ladite grosse roue dentée motrice (22) comprend un engrenage droit.

9. Partie arrière d'un véhicule, en particulier d'un véhicule agricole ou de construction, la partie arrière (38) comprenant un essieu arrière (90) ; et une transmission finale selon l'une quelconque des revendications 1 à 8, ladite transmission finale (10) étant attachée audit essieu arrière (90).

10. Véhicule, en particulier véhicule agricole ou de construction, comprenant un moteur (40) ; et une partie arrière (38) accouplée audit moteur (40), ladite partie arrière (38) comportant un essieu arrière (90) ; et une transmission finale (10) selon l'une quelconque des revendications 1 à 8, ladite transmission finale (10) étant attachée audit essieu arrière (90).
